# NEUE EUROPÄISCHE PATENTSCHRIFT

(11) **EP 0 186 727 B2**
(45) Veröffentlichungstag und Bekanntmachung des Hinweises auf die Entscheidung über den Einspruch: **11.10.1995**
(45) Hinweis auf die Patenterteilung: 25.01.1989
(21) Anmeldenummer: 85105808.1
(22) Anmeldetag: 11.05.1985
(51) Int. Cl.: F16L 23/02, F16L 19/03, F16J 15/00

(54) **Rohrverbindung**
Tube coupling
Raccord de conduits

(30) Priorität: 11.12.1984 DE 8436214 U; 11.12.1984 DE 8436215 U
(43) Veröffentlichungstag der Anmeldung: 09.07.1986
(73) Patentinhaber: Agintec AG, CH-8808 Pfäffikon (CH)
(72) Erfinder: Maier, Hans Paul, D-7730 Villingen-Schwenningen (DE); Vlaykowski, Nikolay, D-7730 Villingen-Schwenningen (DE)
(74) Vertreter: Gramm, Werner, Prof., Dipl.-Ing.

(56) Entgegenhaltungen:
- DE-A- 1 675 213
- DE-A- 1 914 697
- DE-A- 2 029 727
- DE-A- 2 157 162
- DE-A- 2 333 686
- DE-A- 3 206 570
- DE-A- 3 602 780
- DE-B- 1 175 951
- DE-C- 3 038 491
- DE-U- 7 004 725
- DE-U- 7 223 244
- DE-U- 8 436 214
- DE-U- 8 436 215
- GB-A- 1 132 934
- US-A- 2 036 320
- US-A- 2 182 797
- US-A- 2 444 380
- US-A- 2 900 199
- US-A- 3 104 898
- US-A- 3 116 078
- US-A- 3 235 293
- US-A- 3 235 935
- US-A- 3 498 649
- US-A- 4 480 861
- LUEGER, Lexikon der Technik, Band 1, 4. Auflage, Deutsche Verlagsanstalt Stuttgart

## Beschreibung

Die Erfindung betrifft eine Rohrverbindung zwischen zwei stumpf miteinander zu verbindenden Rohrenden, die jeweils ein lose aufgeschobenes Kammerteil und einen ebenfalls lose aufgeschobenen Flansch aufweisen, die z. B. durch eine Verschraubung gegeneinander verspannbar sind, wobei die beiden Kammerteile jeweils eine Dichtungskammer aufweisen, in die ein den Verbindungsstoß umschließender Dichtungsring in Form eines Elastomer-Formringes mit einem eingebetteten Innenring mit seinen beiden axialen Enden ragt, die beim Verspannen der beiden Kammerteile unter Anpassung an die Innenkontur der zugeordneten Dichtungskammer verformt werden.

Eine derartige Ausführungsform läßt sich der DE-B-3 206 570 entnehmen. Hier sind auf jedes der beiden Rohrenden jeweils ein Flansch, zumindest ein Klemmelement und ein Kammerteil lose aufgeschoben, die durch die Verschraubung gegeneinander verspannbar sind. Flansch und Kammerteil bilden zwischen sich jeweils eine Klemmkammer, in die das Klemmelement eintaucht, das sich mit einem radial innenliegenden Klemmrand auf dem Rohrende abstützt, hinsichtlich eines radial außenliegenden Klemmrandes von einer Klemmfläche der Klemmkammer übergriffen wird und in axialer Richtung so aus der Klemmkammer herausragt. daß eine das Klemmelement beaufschlagende axiale Druckkraft zu einer Vergrößerung des Außendurchmessers und zu einer Verkleinerung des Innendurchmessers des Klemmelementes führt. Die beiden Kammerteile weisen jeweils eine zum Verbindungsstoß hin offene Dichtungskammer zur Aufnahme des Dichtungsringes auf, während die Klemmkammer zur Aufnahme der Klemmelemente in den genannten Flanschen angeordnet ist und zum Verbindungsstoß hin offen ist. Die beiden Kammerteile sind durch eine Verschraubung gegeneinander verspannbar.

Diese Rohrverbindung ist insbesondere für Hochdruck geeignet und hat sich in der Praxis bereits bewährt. Es hat sich jedoch gezeigt, daß unter hohen Belastungen ein Extrudieren des Elastomer-Formringes im Bereich seiner beiden äußeren, sich auf den Mantelflächen der beiden Rohrenden abstützenden Ringkanten erfolgt. In diesen Fällen fließt dann Dichtungsmaterial in die Toleranzspalte zwischen Kammerteil und Rohrmantel ein. Außerdem hat sich gezeigt, daß die Montage einer derartigen Rohrverbindung hinsichtlich der gegenseitigen Ausrichtung der miteinander zu verbindenden Rohrenden zu Schwierigkeiten führen kann. Außerdem ist der Dichtungsring für bestimmte Rohroberflächen nicht geeignet.

Der Erfindung liegt die Aufgabe zugrunde, die eingangs erläuterte Rohrverbindung hinsichtlich ihrer Abdichteigenschaften sowie ihrer Montage zu verbessern.

Diese Aufgabe wird gemäß der Erfindung dadurch gelöst, daß die beiden äußeren, sich auf der Mantelfläche der beiden Rohrenden abstützenden Ringkanten des Elastomer-Formringes mit einem Radius versehen sind, der größer ist als die Summe der Plus- und Minustoleranzen der Rohrdurchmesser zuzüglich dem montagebedingten Spalt zwischen dem Innendurchmesser der Kammerteile und der größten Toleranz der Rohrdurchmesser.

Dadurch wird ein Extrudieren bzw. eine Verquetschung des Dichtungsmaterials verhindert.

Bei einer Niederdruck-Rohrverbindung reicht es aus, ausschließlich die beiden Flansche über Spannschrauben gegeneinander zu ziehen und dabei auch die beiden Kammerteile gegen die dazwischen angeordnete Dichtung zu drücken. Die Klemmkammer kann bei einer derart abgewandelten Ausführungsform im Kammerteil vorgesehen sein, wobei dann die beiden Flansche als plane Deckel ausgebildet werden können. Die Klemmkammer ist dann zu der dem Verbindungsstoß abgewandten Seite hin offen. Hier besteht das Problem, daß bei Pulsationen an der umlaufenden Stoßstelle zwischen den Kammerteilen im radial außenliegenden Teil der Dichtung eine leichte Verquetschung des Dichtungsmaterials im Toleranzspalt zwischen den beiden Kammerteilen erfolgt, die nicht gesondert verschraubt sind und daher bei Druckpulsationen die wenn auch nur minimalen Bewegungen der Rohrenden zumindest teilweise mitmachen.

Zur Behebung dieses Nachteils ist es vorteilhaft, wenn der Elastomer-Formring in seiner äußeren Mantelfläche eine mittig angeordnete, nach außen offene Ringnut aufweist.

Insbesondere bei Rohren großen Durchmessers ist es zweckmäßig, wenn sich der Innenring aus mehreren Kreissegmenten zusammensetzt. Hierbei wird die Montage dann erleichtert, wenn der Innenring einen sich radial nach außen leicht keilförmig verbreiternden Querschnitt aufweist und in eine seinem Querschnitt angepaßte Ringnut des Elastomer-Ringes lose eingreift. Der in einzelne Kreissegmente unterteilte Innenring läßt sich preiswerter herstellen. Um beim Einsetzen der einzelnen Segmente ein Herausfallen aus dem Elastomer-Ring zu verhindern, weist die zur Aufnahme des Innenringes vorgesehene Ringnut des Elastomer-Ringes einen leicht hinterschnittenen Querschnitt auf, so daß sich die Kreissegmente in die Nut eindrücken und allein aufgrund der Elastizität des Elastomers fixieren lassen.

Der Innenring liegt jeweils lose in der Ringnut des Elastomer-Ringes, so daß der Arbeitsdruck des Mediums die Abdichtwirkung des Elastomer-Ringes verstärkt.

Insbesondere zur Abdichtung hoher Drücke ist es vorteilhaft, wenn die beiden inneren, sich auf der Mantelfläche der beiden Rohrenden abstützenden Ringkanten des Elastomer-Formringes im Querschnitt einen Winkel von ≦ 90° bilden. Unabhängig von der Querschnittsausbildung der inneren Ringnut des Elastomer-Formringes zur Aufnahme des Innenringes kommt der Ausbildung der genannten inneren Ringkanten des Elastomer-Formringes hinsichtlich der Abdichtung eine große Bedeutung zu. Solange der vorstehend definierte Winkel β maximal 90° beträgt. vorzugsweise aber etwas kleiner ausgebildet ist. tritt insbesondere bei hohen Drücken in diesem Bereich eine Selbstdichtung auf.

In der Zeichnung sind einige als Beispiele dienende Ausführungsformen der Erfindung dargestellt. Es zeigen:
- Figur 1: eine in der Montage befindliche Rohrverbindung im Längsschnitt;
- Figur 2: ebenfalls im Längsschnitt eine abgewandelte Ausführungsform in montierter Stellung, die nicht unter Anspruch 1 fällt;
- Figur 3: in vergrößertem Maßstab einen Querschnitt durch die eine Hälfte eines Dichtungsringes;
- Figur 4: ebenfalls im vergrößerten Maßstab zwei Schnitte durch einen Dichtungsring;
- Figur 5: in Draufsicht und in einem Schnitt in einer abgewandelten Ausführungsform einen Innenring für einen Dichtungsring;
- Figur 6: einen abgewandelten Innenring in einem Schnitt gemäß Figur 5 und
- Figur 7: eine abgewandelte Ausführungsform in einer schematischen Darstellung gemäß Figur 1.

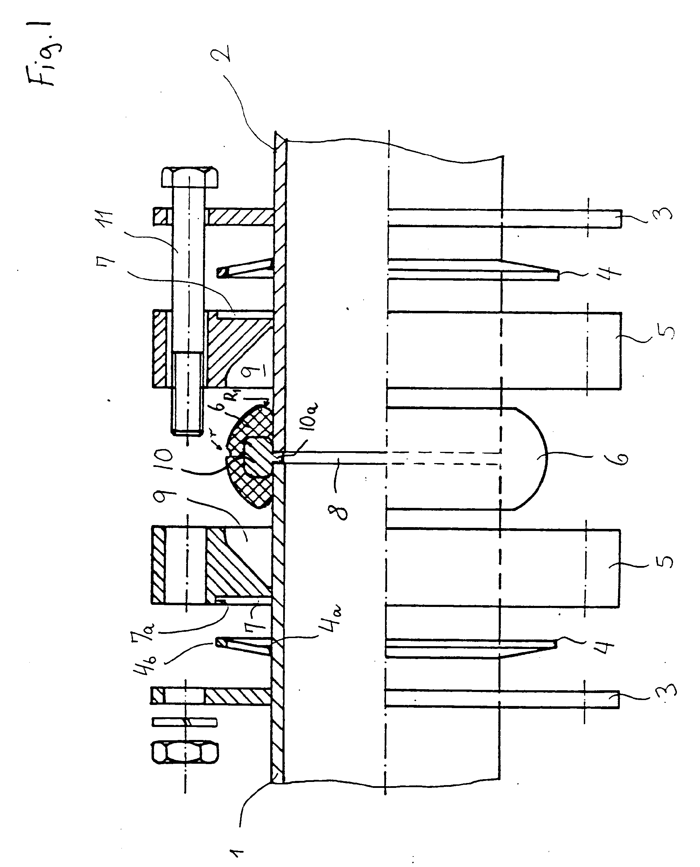

Zur Herstellung einer Rohrverbindung gemäß Figur 1 werden auf zwei stumpf miteinander zu verbindende Rohrenden 1, 2 jeweils zuerst ein Flansch 3, ein Klemmelement 4, ein Kammerteil 5 sowie für beide Rohrenden 1, 2 gemeinsam ein Dichtungsring aufgeschoben. Jedes Kammerteil 5 weist eine zum Flansch 3 hin offene, kreisringförmige Klemmkammer 7 auf, in die das Klemmelement 4 eingeschoben wird. Letzteres besteht aus einer konvex ausgebildeten Scheibe, die sich mit einem radial innenliegenden Klemmrand 4a auf dem Rohrende 1 bzw. 2 abstützt und hinsichtlich ihres radial außenliegenden Klemmrandes 4b von einer ringförmigen Klemmfläche 7a der Klemmkammer 7 übergriffen wird. In entlastetem Zustand ragt das Klemmelement 4 über die Stirnfläche des zugeordneten Kammerteils 5 hinaus. Die Ausbildung der Klemmelemente 4 ist dabei so gewählt, daß eine die Klemmelemente in axialer Richtung gegen die Rückseite der zugeordneten Klemmkammer 7 drückende Kraft zu einer Vergrößerung des Außendurchmessers und gleichzeitig zu einer Verkleinerung des Innendurchmessers des Klemmelementes führt. Das Kammerteil 5 ist mit einer jeweils zum Verbindungsstoß 8 hin offenen Dichtungskammer 9 versehen, die konusförmig ausgebildet ist, sich also in Richtung auf den benachbarten Flansch 3 verjüngt. Diese konusförmige Ausbildung ist wichtig für die Beaufschlagung des Dichtungsringes.

Der Verbindungsstoß 8 wird von dem genannten Dichtungsring umschlossen, der aus einem Elastomer-Formring 6 besteht, der eine nach innen offene Ringnut 6a aufweist, in die lose ein Innenring 10 eingebettet ist. Die Außenkontur der Elastomer-Formdichtung entspricht etwa der der beiden Dichtungskammern 9 in den Kammerteilen 5, weist jedoch ein Übermaß auf, so daß ein Gegeneinanderdrücken der beiden Kammerteile 5 den Dichtungsring mit einem Druck beaufschlagt, der axial und radial nach innen gerichtet ist.

Die Verspannung erfolgt über vier gleichmäßig am Flanschumfang verteilt angeordnete Schraubbolzen 11, die durch die Flansche 3 sowie die Kammerteile 5 hindurchgesteckt sind.

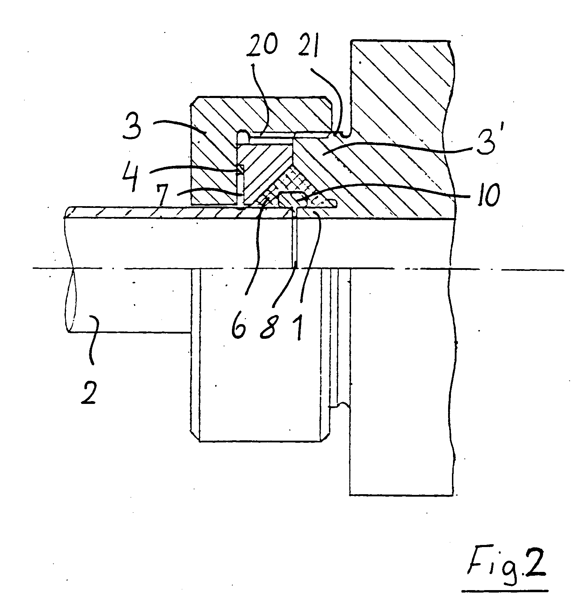

Figur 2 zeigt die Verwendung des Dichtungsringes 6, 10 bei einem Rohranschluß mit einem ortsfesten maschinenseitigen Flansch 3′, der auch durch einen Gehäuseabschnitt gebildet sein kann, ortsfest ist und die eine der beiden Dichtungskammern für das zugeordnete axiale Ende des Dichtungsringes 6, 10 aufweist. Die im maschinenseitigen Flansch 3′ angeordnete Dichtungskammer bildet dabei zugleich den Rohrstutzen 1. Der rohrseitige Flansch 3 ist als Muffe ausgebildet, die mit einem Innengewinde 20 auf ein Außengewinde 21 des maschinenseitigen Flansches 3′ geschraubt ist.

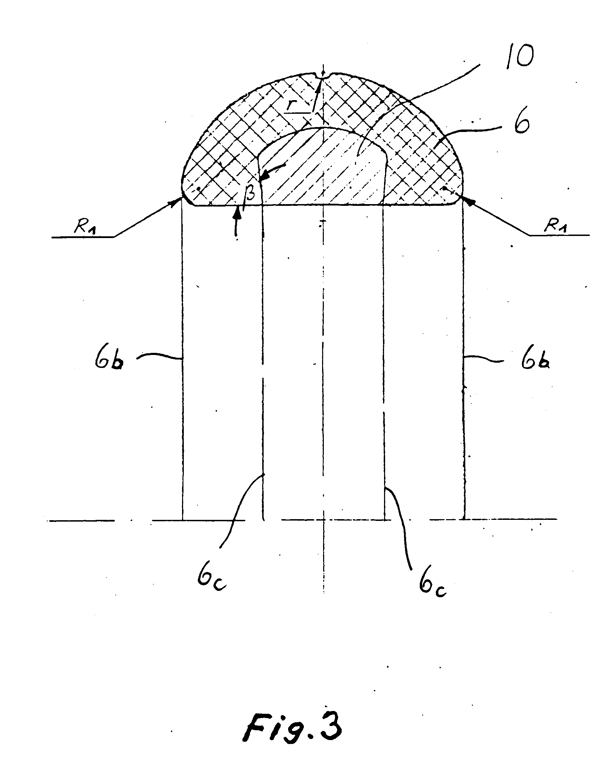

Figur 1, insbesondere aber Figur 3 lassen erkennen, daß bei dem Elastomer-Formring 6 die beiden äußeren, sich auf der Mantelfläche der beiden Rohrenden 1, 2 abstützenden Ringkanten 6b mit einem Radius R1 versehen sind. Der Elastomer-Formring 6 weist in seiner äußeren Mantelfläche außerdem eine mittig angeordnete, nach außen offene Ringnut r auf.

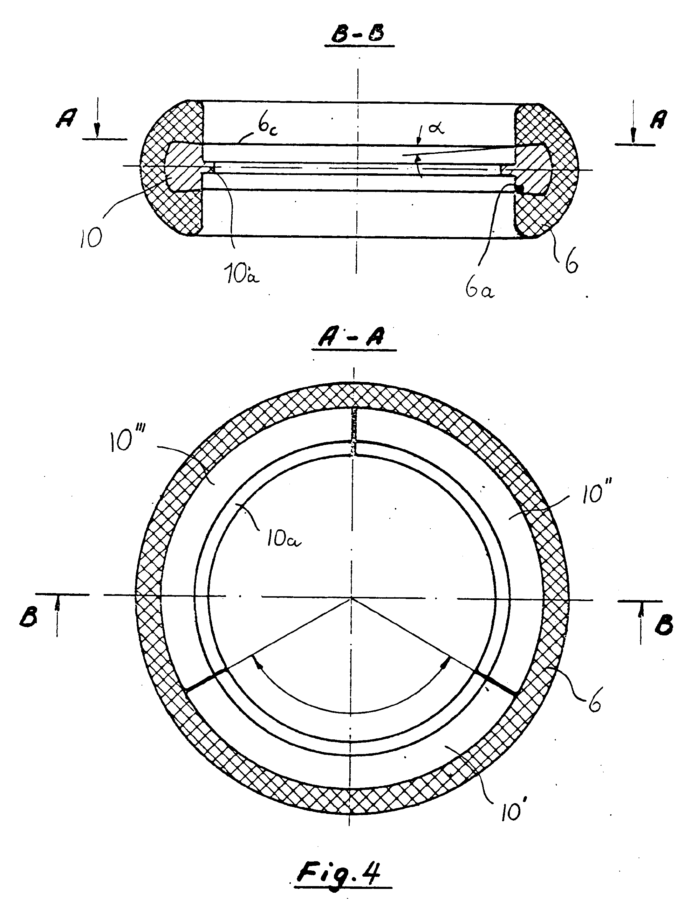

Gemäß den Figuren 1, 2 sowie 4 bis 7 weist der Innenring 10 einen inneren ringförmigen Bund 10a auf, der als Anschlag zwischen die beiden Rohrenden 1, 2 ragt. Gemäß Figur 4 weist dieser Innenring 10 einen sich radial nach außen leicht keilförmig verbreiternden Querschnitt auf und greift in die seinem Querschnitt angepaßte Ringnut 6a des Elastomer-Formringes 6 lose ein. Die Keilschräge ist durch den Winkel α gekennzeichnet.

Der Schnitt A-A in Figur 2 läßt erkennen, daß sich der Innenring 10 aus drei Kreissegmenten 10′,10˝ und 10‴ zusammensetzt, die sich jeweils über 120 Umfangsgrad erstrecken.

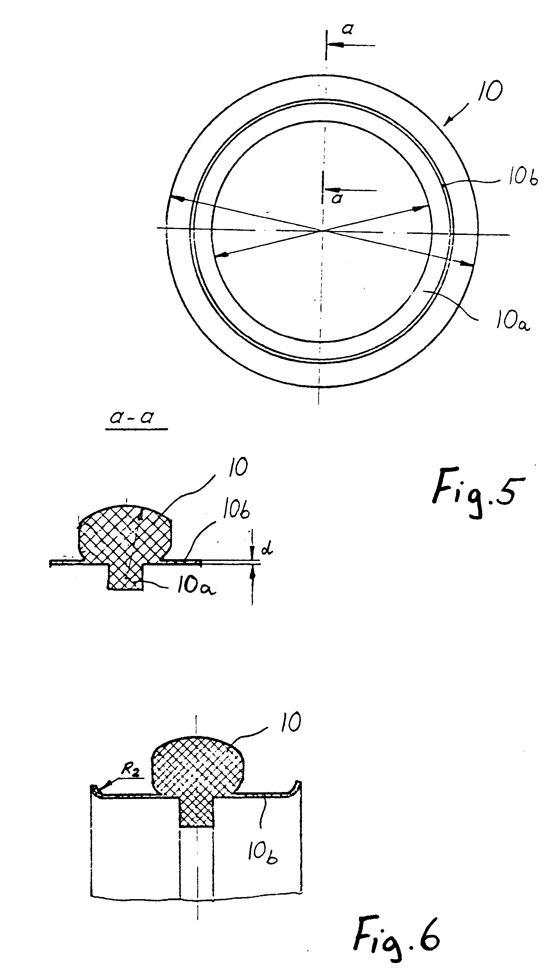

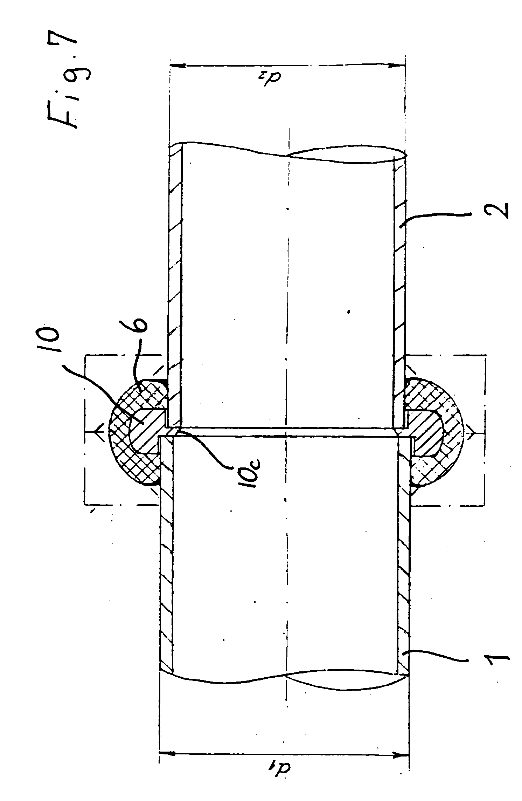

Der in Figur 5 dargestellte Innenring 10 untergreift mit je einer beidseitig vom ringförmigen Bund 10a angeordneten ringförmigen Lippe 10b den Elastomer-Formring 6. Die Dicke d der ringförmigen Lippe 10b beträgt etwa 0,5 mm. Bei der in Figur 6 dargestellten Ausführungsform sind die beiden Lippen 10b etwas breiter ausgeführt und gehen jeweils in einen abgebogenen Rand R2 über, mit dem sie den Elastomer-Formring 6 beidseitig umgreifen. Dadurch ergibt sich eine zusätzliche Abstützung an den mit entsprechenden Radien versehenen Stirnflächen des Elastomer-Ringes, so daß auch Formringe geringerer Shore-Härte eingesetzt werden können, die dadurch montagefreundlich und preiswert sind.

Bei der in Figur 7 schematisch dargestellten Ausführungsform weisen die miteinander zu verbindenden Rohrenden 1, 2 unterschiedliche Außendurchmesser d1, d2 auf. Dabei weist der sich auf dem einen Rohrende 1 abstützende Ringbereich des Dichtungsringes 6,10 einen größeren lichten Innendurchmesser auf als sein sich auf dem anderen Rohrende 2 abstützender Bereich. Der Innenring 10 weist eine konische, die unterschiedlichen Innendurchmesser der miteinander zu verbindenden Rohrenden 1, 2 ausgleichende Innenkontur 10c.

Insbesondere in Figur 3 ist erkennbar, daß die beiden inneren, sich auf der Mantelfläche der beiden Rohrenden 1,2 abstützenden Ringkanten 6c des Elastomer-Formringes 6 im Querschnitt einen Winkel β von < 90° bilden. Hierdurch ergibt sich eine Verbesserung der Abdichtungseigenschaften, und zwar insbesondere bei hohen Drücken.

## Patentansprüche

1. Rohrverbindung zwischen zwei stumpf miteinander zu verbindenden Rohrenden (1, 2), die jeweils ein lose aufgeschobenes Kammerteil (5) und einen ebenfalls lose aufgeschobenen Flansch (3; 3′) aufweisen, die z. B. durch eine Verschraubung (11; 20, 21) gegeneinander verspannbar sind, wobei die beiden Kammerteile (5) jeweils eine Dichtungskammer (9) aufweisen, in die ein den Verbindungsstoß (8) umschließender Dichtungsring in Form eines Elastomer-Formringes (6) mit einem eingebetteten Innenring (10) mit seinen beiden axialen Enden ragt, die beim Verspannen der beiden Kammerteile (5) unter Anpassung an die Innenkontur der zugeordneten Dichtungskammer (9) verformt werden, dadurch gekennzeichnet, daß die beiden äußeren, sich auf der Mantelfläche der beiden Rohrenden (1,2) abstützenden Ringkanten (6b) des Elastomer-Formringes (6) mit einem Radius (R1) versehen sind, der größer ist als die Summe der Plus- und Minustoleranzen der Rohrdurchmesser zuzüglich dem montagebedingten Spalt zwischen dem Innendurchmesser der Kammerteile (5) und der größten Toleranz der Rohrdurchmesser.

2. Rohrverbindung nach Anspruch 1 dadurch gekennzeichnet, daß der Elastomer-Formring (6) in seiner äußeren Mantelfläche eine mittig angeordnete, nach außen offene Ringnut (r) aufweist.

3. Rohrverbindung nach einem der vorhergehenden Ansprüche, dadurch gekennzeichnet, daß der Innenring (10) einen sich radial nach außen leicht keilförmig verbreiternden Querschnitt aufweist und in eine seinem Querschnitt angepaßte Ringnut (6a) des Elastomer-Ringes (6) lose eingreift.

4. Rohrverbindung nach einem der vorhergehenden Ansprüche, dadurch gekennzeichnet, daß der Innenring (10) aus Metall besteht.

5. Rohrverbindung nach einem der vorhergehenden Ansprüche, dadurch gekennzeichnet, daß die beiden inneren, sich auf der Mantelfläche der beiden Rohrenden (1, 2) abstützenden Ringkanten (6c) des Elastomer-Formringes (6) im Querschnitt einen Winkel (β) von ≦ 90° bilden.

## Claims

1. Pipe joint between two pipe ends (1, 2) which are to be butt joined together and which each comprise a loosely fitted chamber portion (5), and an also loosely fitted flange (3; 3′), which can be braced together e.g. by a screw connection (11; 20, 21) and both chamber portions (5), each comprise a sealing chamber (9) into which a sealing ring surrounding the butt joint (8) in the form of an elastomeric moulded ring (6) with an embedded inner ring (10) extends by its two axial ends, which are deformed when the two chamber portions (5) are braced, adapting to the internal contour of the associated sealing chamber (9), characterised in that the two outer ring edges (6b) of the elastomeric moulded ring (6), which are supported on the cylindrical surfaces of the two pipe ends (1, 2), are provided with a radius (R1), which is greater than the sum of the plus and minus tolerances of the pipe diameters plus the clearance on account of assembly between the inside diameter of the chamber portions (5) and the maximum tolerance of the pipe diameters.

2. Pipe joint according to claim 1, characterised in that the elastomeric moulded ring (6) comprises a centrally located, outwardly opening, annular groove (r) in its outer cylindrical surface.

3. Pipe joint according to any of the preceding claims, characterised in that the inner ring (10) has a cross-section which widens in a slight wedge shape radially outwards and loosely engages in an annular groove (6a) of the elastomeric ring (6) adapted to its cross-section.

4. Pipe joint according to any of the preceding claims, characterised in that the inner ring (10) is made of metal.

5. Pipe joint according to any of the preceding claims, characterised in that the two inner ring edges (6c) of the elastomeric moulded ring (6), which are supported on the cylindrical surfaces of the two pipe ends (1, 2), in cross-section form an angle (β) of ≦90°.

## Revendications

1. Dispositif de raccordement entre les extrémités (1, 2) de deux tubes à raccorder bout à bout, ces extrémités de tubes comportant chacune une partie à chambre (5) enfilée librement et une bride (3, 3′) aussi enfilée librement, pouvant être serrées l'une contre l'autre par exemple par vissage (11; 20, 21) et ces deux parties à chambre (5) comportant chacune une chambre d'étanchéité (9) dans laquelle fait saillie par ses deux extrémités axiales une bague d'étanchéité qui entoure le joint de raccordement (8) et qui a la forme d'une bague de forme (6) en élastomère dans laquelle est insérée une bague intérieure (10), les deux extrémités axiales se déformant, en s'adaptant au contour intérieur des chambres d'étanchéité (9) associées, lorsque l'on serre les deux parties à chambre (5), charactérisé en ce que les deux bords annulaires extérieurs (6b) de la bague de forme (6) en élastomère, qui s'appuient respectivement sur la surface latérale des deux extrémités (1, 2) de tubes, présentent un rayon (R1), lequel est plus grand que la somme des tolérances en plus et en moins sur le diamètre des tubes, plus le jeu, nécessairement réservé pour le montage, entre le diamètre intérieur des parties à chambre (5) et la tolérance maximale sur le diamètre des tubes.

2. Dispositif de raccordement conforme à la revendication 1, caractérisé en ce que la bague de forme (6) en élastomère présente dans sa surface latérale extérieure une gorge annulaire (r) ouverte vers l'extérieur et disposée de façon centrale.

3. Dispositif de raccordement conforme à l'une des revendications précédentes, caractérisé en ce que la bague intérieure (10) présente une section qui s'élargit radialement vers l'extérieur légèrement en forme de coin et est librement engagée dans une gorge annulaire (6a), de section adaptée à la sienne, appartenant à la bague (6) en élastomère.

4. Dispositif de raccordement conforme à l'une des revendications précédentes, caractérisé en ce que la bague intérieure (10) est en métal.

5. Dispositif de raccordement conforme à l'une des revendications précédentes, caractérisé en ce que les deux bords annulaires intérieurs (6c) de la bague de forme en élastomère (6), qui s'appuient respectivement sur les surfaces latérales des deux extrémités de tubes (1, 2) forment en coupe transversale un angle (β) inférieur ou égal à 90°.
